# EUROPÄISCHE PATENTSCHRIFT

(11) **EP 1 026 008 B1**
(45) Veröffentlichungstag und Bekanntmachung des Hinweises auf die Patenterteilung: **03.05.2006**
(21) Anmeldenummer: 00101859.7
(22) Anmeldetag: 31.01.2000
(51) Int. Cl.: B44C 5/04, B32B 27/04, E04F 13/00

(54) **Trägerschicht**
Carrier layer
Couche de support

(30) Priorität: 01.02.1999 DE 19903913
(43) Veröffentlichungstag der Anmeldung: 09.08.2000
(73) Patentinhaber: Bausch Aktiengesellschaft, D-86647 Buttenwiesen (DE)
(72) Erfinder: Schunck, Stephan, Dr., 86161 Augsburg (DE)
(74) Vertreter: Cohausz & Florack

(56) Entgegenhaltungen:
- EP-A- 0 020 001
- DE-A- 3 140 292
- DE-A- 19 710 619
- GB-A- 2 088 280

## Beschreibung

Die vorliegende Erfindung bezieht sich auf ein Overlay, ein Verfahren zu seiner Herstellung, ein Verfahren zur Herstellung eines mehrschichtigen Laminates nach den Oberbegriffen der Ansprüche 1, 15 bzw. 30 sowie auf die Verwendung derartiger Laminate nach dem Oberbegriff des Anspruchs 34. Derartige Overlays werden beispielsweise für dekorative Schichtstoffe benötigt, wie sie beispielsweise für Laminatdecken- und Wandelemente, Türblätter oder Laminate im Bereich der Möbelherstellung verwendet werden.

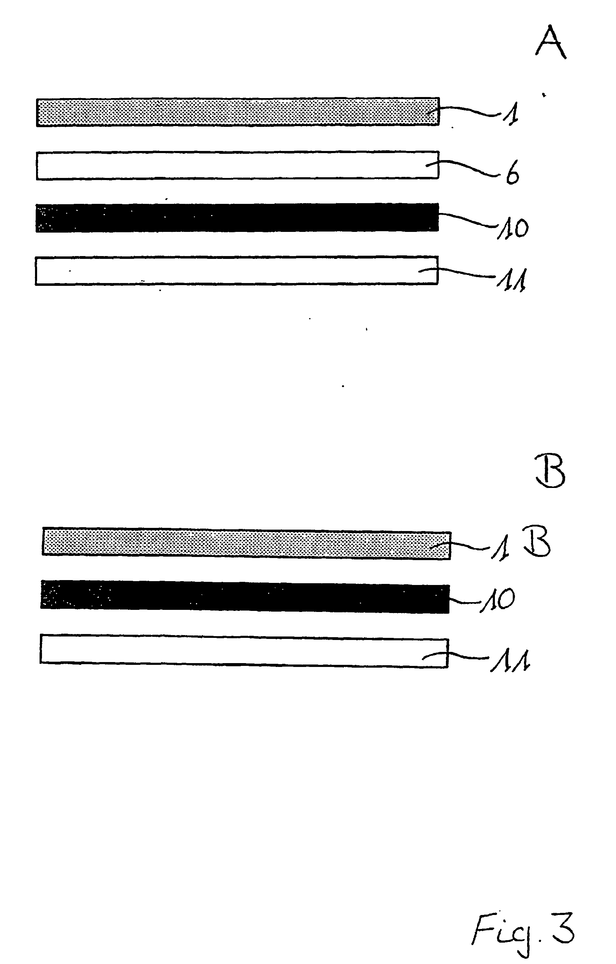

Nach dem Stand der Technik werden derartige dekorative Schichtstoffe aus einem mehrschichtigen Verbund hergestellt, wobei der Verbund mindestens vier Schichten aufweist. Figur 3A zeigt den typischen Aufbau eines herkömmlichen Laminat-Deckenelementes. Danach ist auf einer Trägerplatte 10 ein mit einem Dekor bedrucktes Papier 6 auflaminiert, das auf der Sichtseite den typischen optischen Eindruck des späteren Deckenelementes erzeugt. Dieses Dekorpapier ist durch eine weitere Schicht aus einem Overlaypapier geschützt. Dekorpapier 6 und Overlay 1 sind beispielsweise mit Melamin imprägniert. Auf der Rückseite der Trägerplatte 10 ist eine Gegenzugschicht 11 angeordnet, die verhindert, daß sich die Trägerplatte aufgrund einer einseitigen Beschichtung mit Dekorpapier 6 und Overlay 1 aufgrund deren Zugspannung durchbiegt. Der Gegenzug muß daher genau so dimensioniert sein, daß er die Zugspannung von Dekorpapier 6 und Overlaypapier 1 ausgleicht.

Als Trägerplatten 10 kommen üblicherweise mitteldichte Faserplatten oder Preßspanplatten zum Einsatz. Dekorpapiere 6 sind in der Regel Spezialpapiere mit einem Gewicht von 50 bis 100 g/m², die mit Holz- oder Phantasiedekoren bedruckt sind und die mit Melamin- oder Harnstoffharzen oder einem Gemisch aus diesen in wenigstens einem Schritt imprägniert werden. Die Harzauflage beträgt dabei üblicherweise 80 bis 120 % bezogen auf das Papiergewicht. Bei dem Overlay handelt es sich im allgemeinen um ein sogenanntes Overlaypapier, das ein Flächengewicht zwischen 20 und 50 g/m² aufweist. Dieses Overlaypapier wird beim Verpressen mit dem Dekorpapier und der Trägerplatte vollständig durchsichtig, so daß das Dekor des Dekorpapiers 6 sichtbar wird.

Der Gegenzug 11 ist ein preiswertes, ebenfalls imprägniertes Papier, das als Balance dient, damit der gesamte Aufbau aufgrund der Vernetzung der eingesetzten Kondensationsharze in Dekorpapier und Overlay nicht in eine Richtung schüsselt.

Die einzelnen Papiere, die zum Aufbau eines Laminates eingesetzt werden, werden von verschiedenen Herstellern hergestellt und erst beim Hersteller des Laminates zusammengefügt. Damit ergibt sich bei der Herstellung des Laminates ein sehr großer Fertigungsaufwand, da im allgemeinen vier verschiedene Schichten miteinander verpreßt werden müssen. Weiterhin muß der Gegenzug geeignet dimensioniert werden, damit er die Zugspannungen, die von Dekorpapier und Overlay verursacht werden, ausgleicht.

Aufgabe der vorliegenden Erfindung ist es daher, ein Overlay sowie ein Verfahren zur Herstellung von Overlays und Laminaten sowie deren Verwendung anzugeben, durch die die Herstellung von Laminaten vereinfacht und kostengünstiger durchgeführt werden kann.

Diese Aufgabe wird durch das Overlay nach dem Oberbegriff des Anspruchs 1, das Verfahren zur Herstellung eines Overlays nach dem Oberbegriff des Anspruchs 15, das Verfahren zur Herstellung eines mehrschichtigen Laminates nach dem Oberbegriff des Anspruchs 30 in Verbindung mit ihren jeweiligen kennzeichnenden Merkmalen sowie die Verwendung derartiger Laminate nach dem Ansprüche 34 gelöst. Vorteilhafte Weiterbildungen des erfindungsgemäßen Overlays und der erfindungsgemäßen Verfahren werden in den abhängigen Ansprüchen gegeben.

Das erfindungsgemäße Overlay besitzt eine Trägerschicht, beispielsweise aus Overlaypapier, mit einer als Sichtseite fungierenden Oberseite und einer im applizierten Zustand dem Belagelement zugewandten Unterseite, wobei die Trägerschicht imprägniert ist und auf ihrer Unterseite eine farbgebende Schicht (FOND) aufweist. Wird ein derartiges Overlay unmittelbar beispielsweise auf eine mitteldichte Faserplatte verpreßt, so wird das als Trägerschicht fungierende Overlaypapier transparent und die farbgebende Schicht erscheint als Dekorschicht. Dadurch wirkt die Trägerschicht des Overlaypapiers nicht nur als äußerste Schutzschicht sondern zugleich als dekortragende Schicht. Die Trägerschicht des Overlays stellt selbst einen Schutz für die farbgebende Schicht dar. Bei der Herstellung eines Laminates kann folglich auf das Aufbringen einer eigenen Dekorschicht verzichtet werden. Der Herstellungsprozeß für Laminate wird daher erheblich vereinfacht.

Wichtig ist bei dem erfindungsgemäßen Overlay, daß auf seiner Unterseite eine farbgebende Schicht aufgebracht, beispielsweise auflackiert, ist. Denn die beispielsweise mit Melaminharzen imprägnierte Trägerschicht des Overlays wird beim Verpressen auf den Laminatträger transparent. Ohne den rückseitigen Strich wäre dann lediglich der Laminatträger zu sehen. Folglich übernimmt der rückseitige Strich die Funktion des herkömmlichen Dekorpapieres.

Gegebenenfalls kann die Trägerschicht auf der Sichtseite mit einer Schicht, die ein abriebfestes Material enthält, versehen werden, um das Laminat strapazierfähig zu machen. Durch die lediglich einseitige Beschichtung mit dem abriebfesten Material kann dennoch die Unterseite vor der abriebfesten Beschichtung auch die Oberseite der Trägerschicht oder auch die Oberseite der Trägerschicht zwischen Trägerschicht und abriebfester Beschichtung noch mit den dekorgebenden Strukturen bedruckt oder lackiert werden kann. Anderenfalls würden die dafür nötigen Druckzylinder, etc. durch das abriebfeste Material zerstört werden. Eine vollständig mit abriebfestem Material durchsetzte Trägerschicht wäre nicht zum Auftrag der farb- und mustergebenden Schichten auf der Unterseite und/oder Oberseite der Trägerschicht geeignet.

Für das erfindungsgemäße Verfahren sind alle herkömmlichen Overlaypapiere, am besten jedoch zusätzlich satinierte Overlaypapiere geeignet. Herkömmliche Overlaypapiere besitzen eine offene Struktur. Allerdings wird durch die Imprägnierung des Overlaypapiers die offene Struktur beseitigt.

Neben der farbgebenden Schicht werden, wie auch in herkömmlicher Weise, weitere Druckschichten auf die Unterseite des Trägermaterials aufgebracht, die eine Musterung, beispielsweise eine holzmaserungsähnliche Musterung, erzeugen. Diese Druckschichten können vor oder nach der Imprägnierung der Trägerschicht auf die Trägerschicht aufgedruckt werden. Wesentlich ist jedoch, daß die farbgebende Schicht als unterste Schicht aufgebracht wird. Denn dadurch kommt in dem Laminat die farbgebende Schicht zu unterst zu liegen, so daß die Maserung, die durch die Druckschichten erzeugt wird, von der Sichtseite des Laminates aus zu erkennen und durch die farbgebende Schicht unterlegt ist.

Dies bedeutet erfindungsgemäß, daß der Aufbau der Unterseite der Trägerschicht des Overlays in umgekehrter Reihenfolge wie bei herkömmlichen Dekorpapieren, die auf herkömmlicher Weise auf ihrer Sichtseite bedruckt werden, d.h. jetzt im Konterdruck, erfolgt. Beim erfindungsgemäßen Verfahren wird folglich die Trägerschicht auf ihrer Unterseite in der Reihenfolge: strukturgebender Aufdruck und anschließend ggf. weitere Farbschichten angeordnet. Abschließend wird die farbgebende Schicht (Fond) aufgebracht.

Alternativ oder zusätzlich kann vor oder nach dem Aufbringen der farbgebenden Schicht auf der Unterseite, jedoch vor dem Aufbringen der abriebfesten Beschichtung die Trägerschicht auf ihrer Oberseite in der herkömmlichen Reihenfolge von gegebenenfalls weiteren Farbschichten und anschließend strukturgebender Aufdruck bedruckt werden.

Die farbgebende Schicht muß nicht aufgedruckt werden sondern kann auch auf die Unterseite der Trägerschicht auflackiert werden. Daher ist es auch möglich, die farbgebende Schicht erst nach der Ausrüstung des Overlays mit dem abriebfesten Material auf die Trägerschicht aufzulackieren.

Vorteilhaft an dem erfindungsgemäßen Overlay und den erfindungsgemäßen Laminaten ist weiterhin, daß, sofern ein Gegenzug trotz des nunmehr einfacheren Aufbaus des erfindungsgemäßen Laminates überhaupt benötigt wird, die Dimensionierung des Gegenzuges einfacher durchgeführt werden kann. Denn auf der Sichtseite des Laminates wird lediglich noch eine Schicht, das dekorgebende Overlay, aufgebracht. Diese ist zudem wegen des geringeren Gewichtes von Overlaypapier leichter und dünner als herkömmliche, aus Dekorpapier hergestellte Dekorschichten. Dementsprechend kann auch die Gegenzugschicht mit dünnerer Schichtdicke dimensioniert werden. Im folgenden werden einige Ausführungsformen der Erfindung beschrieben werden.

Es zeigen
Figur 1 die Herstellung eines erfindungsgemäßen Overlays;
Figur 2 den Aufbau eines herkömmlichen Dekorpapieres (Figur 2a) und den Aufbau eines erfindungsgemäßen Overlays (Figur 2b); und
Figur 3 den Aufbau eines herkömmlichen (Figur 3a) und eines erfindungsgemäßen Laminates (Figur 3b).

In einer Ausführungsform des erfindungsgemäßen Verfahrens zur Herstellung eines Overlays werden die folgenden Schritte durchgeführt:

### 1. Bedrucken des Overlays

Eine Trägerschicht aus einem Druckbasispapier aus deckenden mit TiO₂ gefüllten Papieren oder einem ungefüllten Overlaypapier wird im Konterdruck, beginnend mit der letzten Farbe (bezogen auf herkömmliche, sichtseitige normale Druckverfahren), dann mit der vorletzten Farbe, etc., bis hin zur zweiten Farbe bedruckt. Das Aufdrucken in dieser umgekehrten Reihenfolge kann beispielsweise durch Tiefdruck erfolgen. Dies bedeutet, daß zuerst der strukturgebende Aufdruck, dann helle Farbe, dunkle Farbe und erst abschließend der Fond, d.h. zuerst werden die einzelnen, das Muster ergebende Schichten ausschließlich der den Grundfarbton gebenden Schicht in umgekehrter Reihenfolge auf der Unterseite des Overlaypapiers aufgedruckt wird.

### 2. Imprägnieren des Overlays

Das bedruckte Overlay wird nun mit einem speziellen Melaminharz oder einer Mischung aus Melaminharz und Harnstoffharzen getränkt, wobei im Verhältnis zum Overlaygewicht ca. 150 bis 250 % Harz aufgenommen werden. Dieses so imprägnierte Overlay wird anschließend ggf. getrocknet (siehe Punkt 3).

### 3. Optionales Aufbringen einer abriebfesten Schicht

Eine abriebfeste Schicht kann optional auf verschiedene Arten aufgebracht werden. So können beispielsweise 1 bis 20 g/m² Edelkorund mit einer Korngröße von 1 bis 80 µm auf die Sichtseite des getränkten, noch nicht getrockneten Overlaypapiers aufgebracht werden. Andererseits ist es auch möglich, das getränkte, getrocknete Overlaypapier auf seiner Sichtseite mit einer zusätzlichen Melaminharzschicht zu überziehen, in die anschließend in gleicher Weise Edelkorund eingestreut wird. Es kann auch unmittelbar eine spezielle Mischung aus Melaminharz, ggf. α-Zellulose, und Edelkorund mit der oben angegebenen Korngröße auf das imprägnierte getrocknete oder noch nicht getrocknete Overlaypapier aufgebracht werden. Auch weitere Möglichkeiten, in diesem Schritt eine abriebfeste Schicht auf die Sichtseite des Overlays aufzubringen, sollen hiermit nicht ausgeschlossen werden.

Anschließend an die oben beschriebenen Verfahrensschritte wird das Overlaypapier getrocknet.

Als weitere Alternative zur Aufbringung der abriebfesten Schicht kann ein zusätzliches Overlaypapier mit einer Grammatur von 13 bis 45 g/m², das, wie oben angeführt, imprägniert und mit Edelkorund beschichtet wurde, auf das dekorgebende Overlay aufgebracht werden. Der entscheidende Vorteil, daß die Overlayschicht, die auf ihrer Unterseite das Dekor trägt, bereits einen Schutz für das Dekor darstellt, geht dabei nicht verloren.

### 4. Rückseitenbeschichtung

Im Anschluß an das Aufbringen der abriebfesten Schicht wird die Unterseite des Overlays mit der eigentlichen farbgebenden Schicht (Fond) versehen.

Diese farbgebende deckende Rückseitenbeschichtung, bei der beispielsweise ein spezielles eingefärbtes Melaminharz aufgetragen, beispielsweise auflackiert wird, liefert die eigentliche Optik und übernimmt so die Funktion des üblichen Dekorpapiers. Das speziell eingefärbte Melaminharz kann gegebenenfalls gängige Additive wie Verlaufmittel, Entschäumer und dergleichen enthalten. Würde dieser Schritt entfallen, so wäre das Material vollkommen unbrauchbar, da das bedruckte Overlay beim Verpressen mit dem Laminatträger (Spanplatte, MDF, u.a.), wie oben beschrieben, transparent wird und dann nur noch die Optik des Laminatträgers zum Tragen kommen würde. Die in Schritt 1 aufgedruckten Musterungen wären ohne diesen rückseitigen Strich kaum bzw. gar nicht zu erkennen.

Nach dem erfindungsgemäßen Verfahren können der Schritt 3 (Aufbringen einer abriebfesten Schicht) und der Schritt 4 (Rückseitenbeschichtung) auch in umgekehrter Reihenfolge durchgeführt werden, ohne daß sich Nachteile ergeben.

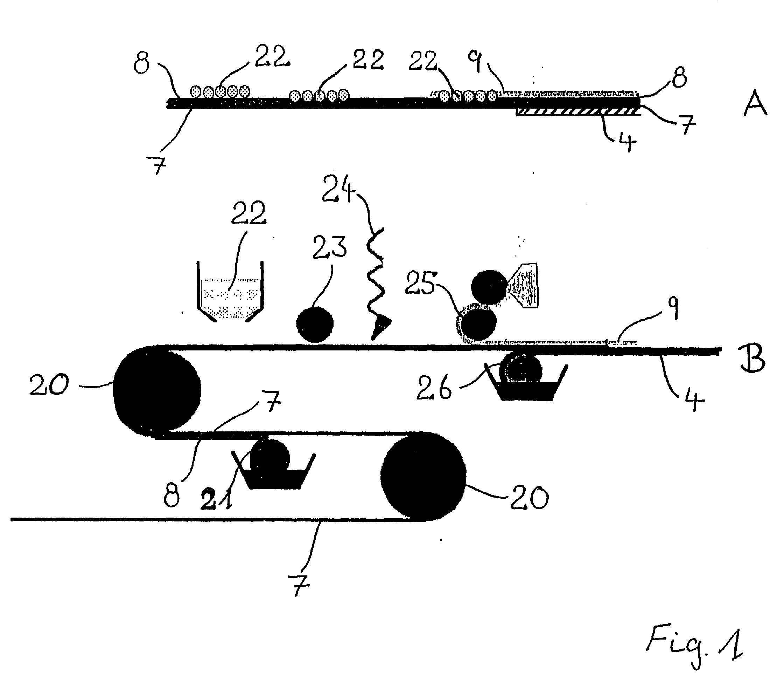

Figur 1B zeigt die Herstellung eines erfindungsgemäßen Overlays. Eine Overlayträgerschicht 7 aus Overlaypapier wird über Umlenkrollen 20 geführt. Nachdem die Overlayträgerschicht 7 über eine Umlenkrolle geführt wurde, wird sie mit ihrer Sichtseite an einem ersten Melaminharzrakel 21 vorbeigeführt. Dort wird die Trägerschicht 7 mit einer ersten Melaminharzschicht 8 imprägniert. Anschließend wird die Trägerschicht 7 nochmals durch eine Umlenkrolle 20 umgelenkt. Die Sichtseite der Trägerschicht 7, die noch mit der ersten feuchten Melaminharzschicht beschichtet ist, wird anschließend aus einem Behälter 22 mit Korundpartikeln (Al₂O₃) bestreut. Diese Korundpartikel dienen als abriebfestes Material und werden mit einer Verreiberwalze 23 in die Melaminharzschicht 8 eingerieben. Daraufhin wird die Melaminharzimprägnierung mittels Infrarotstrahlen 24 getrocknet. Im weiteren Verlauf wird dann auf der Sichtseite der Trägerschicht 7 mit einem zweiten Melaminharzrakel 25 eine zweite Melaminharzschicht 9 auf die Trägerschicht aufgebracht. Im Anschluß daran wird auf der Unterseite der Trägerschicht 7 mittels eines weiteren Rakels 26 die farbgebende Schicht 4 auf die Trägerschicht 7 aufgestrichen.

Das so mit Bezug auf Figur 1B beschriebene Verfahren zur Herstellung des erfindungsgemäßen Overlays wird in Figur 1A noch einmal erläutert. Dort ist der Aufbau des Overlays mit unmittelbarem Bezug auf die darunter dargestellte Herstellung gemäß Figur 1B beschrieben. Nach Umlenkung durch die in Figur 1B dargestellte zweite Umlenkrolle 20 besitzt die Trägerschicht 7 auf ihrer Oberseite (Sichtseite) eine erste Melaminharzschicht 8, auf die lose Korundpartikel 22 aufgestreut sind. Oberhalb der Verreiberwalze 23 in Figur 1B ist in Figur 1A dargestellt, wie die Korundpartikel 22 in die Melaminharzschicht 8 eingedrückt werden. Oberhalb des in Figur 1B dargestellten zweiten Melaminharzrakels 25 ist gezeigt, wie durch die zweite Melaminharzschicht 9, die gegebenenfalls auch α-Cellulose enthalten kann, die Korundpartikel 22 zur Glättung der Sichtseite des Overlays in die zweite Melaminharzschicht eingebettet werden und anschließend auf der Unterseite der Trägerschicht 7 die farbgebende Schicht 4 aufgebracht wird.

Um als Dekor nicht lediglich eine unifarbene Schicht 4 aufzubringen, wird vor der ersten Umlenkung durch die erste Umlenkrolle 20, d.h. vor dem Imprägnieren der Trägerschicht 7 mit der ersten Melaminharzschicht 8 auf der Unterseite der Trägerschicht 7 eine Musterung aufgedruckt. Diese ist dann bei dem fertigen Overlay gegen die farbgebende Schicht 4 von der Sichtseite des Overlays aus sichtbar, da die melaminharzgetränkte Overlay-Trägerschicht selbst beim Verpressen zur Herstellung eines Laminates vollständig durchsichtig wird.

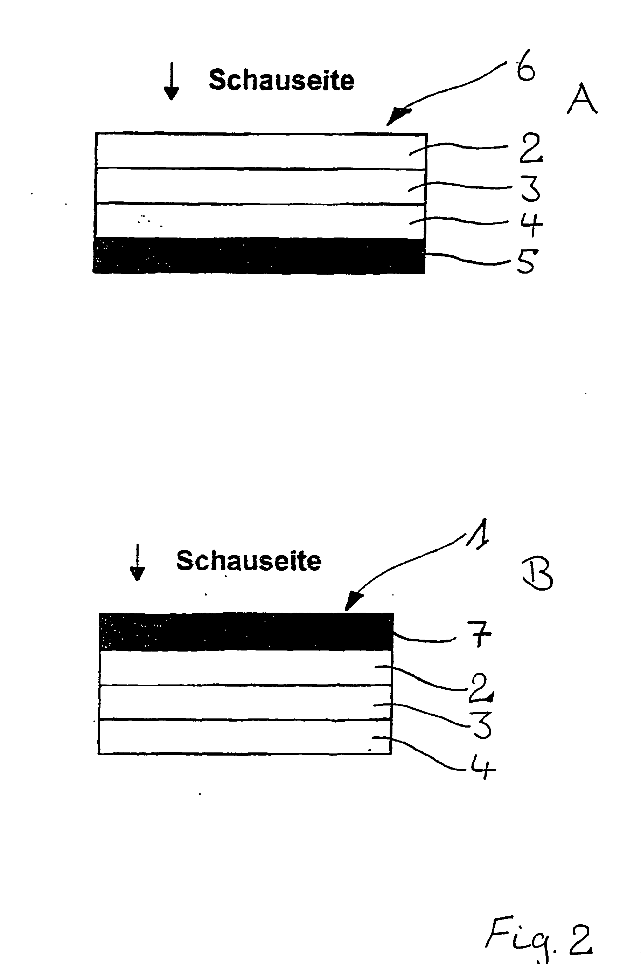

Figur 2A zeigt eine herkömmliche Dekorschicht für ein aus mindestens vier Einzelschichten aufgebautes Laminat. Die Dekorschicht weist eine Dekorträgerschicht 5 auf, auf deren Schauseite zuerst eine farbgebende Schicht 4 und anschließend Musterungen ergebende Strukturschichten 3 und 2 aufgetragen werden. Damit heben sich die von der Schauseite her betrachteten strukturgebenden Schichten 2 und 3 gegenüber der farbgebenden Schicht 4 ab und erzeugen das gewünschte Dekor.

Figur 2B zeigt den Aufbau eines erfindungsgemäßen Overlays. Eine Trägerschicht 7 aus Overlaypapier, die beispielsweise mit Melaminharz imprägniert ist, weist auf ihrer von der Schauseite abgewandten Unterseite eine Strukturschicht 2 und eine Strukturschicht 3 sowie eine farbgebende Schicht 4 auf, die auf die Trägerschicht 7 in umgekehrter Reihenfolge, wie in Figur 2A dargestellt, aufgebracht sind. Da die imprägnierte Trägerschicht 7 beim Verpressen mit dem Laminatträger, beispielsweise einer Sperrholzplatte, vollständig durchsichtig wird, heben sich auch in diesem Falle von der Schauseite her die Strukturschichten 2 und 3 gegenüber dem farbgebenden Untergrund 4 ab.

Figur 3A zeigt ein herkömmliches Laminat, bei dem auf einen Laminatträger 10 aus mitteldichter Faserplatte (MDF) oder Spanplatte oder dergleichen schauseitig zuerst ein Dekorpapier 6 und anschließend eine abriebfestigkeitsverleihende Overlayschicht 1 auflaminiert sind. Zum Ausgleich der durch die Schichten 6 und 1 entstandenen Spannungen wird auf der Rückseite ein Gegenzug 11 auflaminiert. Demgegenüber ist das erfindungsgemäße Laminat, das in Figur 3B dargestellt ist, erheblich einfacher aufgebaut. Auf einen Laminatträger 10 ist schauseitig lediglich das dekorgebende Overlay 1 auflaminiert, während auf der Rückseite des Trägers 10 ein entsprechender Gegenzug 11 angeordnet ist. Es ist unmittelbar zu erkennen, daß die Herstellung eines Laminates, beispielsweise für die Möbelindustrie als Wand- oder Deckenbelag oder auch als Türblatt, nach dem erfindungsgemäßen Verfahren erheblich einfacher und kostengünstiger herzustellen ist. Auch die Dimensionierung des Gegenzuges 11 ist einfacher durchzuführen.

## Patentansprüche

1. Mit einem Dekor versehenes Overlay (1) für ein Laminatelement, wobei das Overlay (1) eine Trägerschicht (7) mit einer als Sichtseite dienenden Oberseite und einer im applizierten Zustand dem Laminatelement zugewandten Unterseite aufweist, wobei die Trägerschicht (7) imprägniert ist und auf ihrer Unterseite eine farbgebende Schicht (4) aufweist,
**dadurch gekennzeichnet, daß**
die Unterseite zwischen dem Trägermaterial (7) und der farbgebenden Schicht (4) Druckschichten (2,3), die eine Musterung erzeugen, aufweist und die farbgebende Schicht (4) auch im auflaminierten Zustand eine deckende Rückseitenbeschichtung bildet.

2. Overlay nach dem vorhergehenden Anspruch, **dadurch gekennzeichnet, daß** die auf der Unterseite des Overlays angeordneten Schichten Schichten aus strukturgebendem Aufdruck, weitere Farbschichten und eine farbgebende Schicht aufweisen und ausgehend von der Trägerschicht in der Reihenfolge strukturgebender Aufdruck, weitere Farbschichten und abschließend farbgebende Schicht angeordnet sind.

3. Overlay nach einem der vorhergehenden Ansprüche, **dadurch gekennzeichnet, daß** seine Oberseite Druckschichten, die eine Musterung erzeugen, aufweist.

4. Overlay nach dem vorhergehenden Anspruch, **dadurch gekennzeichnet, daß** die auf der Oberseite des Overlays angeordneten Schichten Schichten aus strukturgebendem Aufdruck und weitere Farbschichten aufweisen, die ausgehend von der Trägerschicht in der Reihenfolge weitere Farbschichten und anschließend strukturgebender Aufdruck angeordnet sind.

5. Overlay nach einem der vorhergehenden Ansprüche, **dadurch gekennzeichnet, daß** als Musterung eine Holzmaserung aufgedruckt ist.

6. Overlay nach einem der vorhergehenden Ansprüche, **dadurch gekennzeichnet, daß** die Musterung erzeugenden Druckschichten im Tiefdruckverfahren aufgedruckt sind.

7. Overlay nach einem der vorhergehenden Ansprüche, **dadurch gekennzeichnet, daß** die Trägerschicht ein Overlaypapier ist.

8. Overlay nach mindestens einem der vorhergehenden Ansprüche, **dadurch gekennzeichnet, daß** das Overlay auf seiner Oberseite eine Schicht, die ein abriebfestes Material enthält, aufweist.

9. Overlay nach dem vorhergehenden Anspruch, **dadurch gekennzeichnet, daß** die Schicht ein abriebfestes Material gemischt mit einem Bindemittel enthält.

10. Overlay nach Anspruch 8 oder 9, **dadurch gekennzeichnet, daß** das abriebfeste Material Al₂O₃₋haltige Partikel (Korund) enthält.

11. Overlay nach dem vorhergehenden Anspruch, **dadurch gekennzeichnet, daß** das abriebfeste Material Korund mit einer Korngröße zwischen 1 und 80 µm in einer Menge von 1 bis 20 g/m² enthält.

12. Overlay nach einem der vorhergehenden Ansprüche, **dadurch gekennzeichnet, daß** als Imprägnierungsmittel und/oder Bindemittel Melaminharz und/oder eine Mischung aus Melaminharz und Harnstoffharz und/oder eine Mischung dieser mit α-Zellulose verwendet wird.

13. Overlay nach einem der vorhergehenden Ansprüche, **dadurch gekennzeichnet, daß** die farbgebende Schicht ein eingefärbtes Melaminharz und/oder eingefärbtes Melaminharz mit gängigen Additiven enthält.

14. Overlay nach einem der vorhergehenden Ansprüche, **dadurch gekennzeichnet, daß** die farbgebende Schicht auflackiert ist.

15. Verfahren zur Herstellung eines Overlays nach einem der vorhergehenden Ansprüche, **dadurch gekennzeichnet, daß** die Trägerschicht zuerst imprägniert, auf ihrer Unterseite mit einem Muster aus einem strukturgebenden Aufdruck bedruckt und anschließend auf die Unterseite eine farbgebende Schicht aufgetragen wird, die auch im auflaminierten Zustand eine deckende Rückseitenbeschichtung bildet.

16. Verfahren nach Anspruch 15, **dadurch gekennzeichnet, daß** die Trägerschicht vor oder nach der Imprägnierung auf der Oberseite mit einem Muster aus strukturgebendem Aufdruck bedruckt wird.

17. Verfahren nach einem der beiden vorhergehenden Ansprüche, **dadurch gekennzeichnet, daß** das Muster aus strukturgebendem Aufdruck farbig ist.

18. Verfahren nach einem der drei vorhergehenden Ansprüche, **dadurch gekennzeichnet, daß** die Trägerschicht vor oder nach der Imprägnierung auf der Unterseite oder Oberseite mit weiteren Farbschichten bedruckt wird.

19. Verfahren nach einem der Ansprüche 15 bis 18, **dadurch gekennzeichnet, daß** das Muster auf der Unterseite in folgender Schichtfolge: strukturgebender Aufdruck oder strukturgebender Aufdruck und weitere Farbschichten, und abschließend die farbgebende Schicht, beziehungsweise auf der Oberseite in der Schichtfolge: farbgebende Schicht, strukturgebender Aufdruck oder weitere Farbschichten und strukturgebender Aufdruck aufgetragen wird.

20. Verfahren nach einem der Ansprüche 15 bis 19, **dadurch gekennzeichnet, daß** das Muster im Tiefdruckverfahren aufgedruckt wird.

21. Verfahren nach einem der Ansprüche 15 bis 20, **dadurch gekennzeichnet, daß** auf die Oberseite ein abriebfestes Material aufgetragen wird.

22. Verfahren nach einem der Ansprüche 15 bis 21, **dadurch gekennzeichnet, daß** das abriebfeste Material vor der farbgebenden Schicht aufgebracht wird.

23. Verfahren nach dem vorhergehenden Anspruch, **dadurch gekennzeichnet, daß** anschließend an den Auftrag der farbgebenden Schicht weiteres abriebfestes Material auf die Oberseite aufgetragen wird.

24. Verfahren nach dem vorhergehenden Anspruch, **dadurch gekennzeichnet, daß** die farbgebende Schicht vor dem abriebfesten Material aufgebracht wird.

25. Verfahren nach einem der Ansprüche 15 bis 24, **dadurch gekennzeichnet, daß** zum Auftrag des abriebfesten Materials das abriebfeste Material auf die noch feuchte Imprägnierung aufgebracht oder aufgestreut wird, oder die Imprägnierung getrocknet, eine weitere Schicht aus Bindemittel aufgetragen und das abriebfeste Material auf diese noch feuchte Bindemittelschicht aufgebracht wird, oder das abriebfeste Material mit Bindemittel oder mit Bindemittel gemischt mit α-Zellulose gemischt und auf die auf der Trägerschicht befindliche noch feuchte oder bereits getrocknete Imprägnierschicht aufgebraucht wird.

26. Verfahren nach dem vorhergehenden Anspruch, **dadurch gekennzeichnet, daß** das Overlay anschließend getrocknet wird.

27. Verfahren nach einem der Ansprüche 15 bis 26, **dadurch gekennzeichnet, daß** bei Auftrag der Imprägnierung die Trägerschicht mit dem Imprägnierungsmittel getränkt wird.

28. Verfahren nach einem der Ansprüche 15 bis 27, **dadurch gekennzeichnet, daß** als Trägerschicht ein Overlaypapier verwendet wird.

29. Verfahren nach einem der Ansprüche 15 bis 28, **dadurch gekennzeichnet, daß** die farbgebende Schicht auflackiert wird.

30. Verfahren zur Herstellung eines mehrschichtigen Laminates mit einem Laminatträger, **dadurch gekennzeichnet, daß** ein Overlay gemäß einem der Ansprüche 1 bis 14 mit seiner Unterseite auf den Laminatträger gelegt und mit diesem verpreßt wird.

31. Verfahren nach dem vorhergehenden Anspruch, **dadurch gekennzeichnet, daß** auf der anderen Seite des Laminatträgers eine Gegenzugschicht aufgebracht wird.

32. Verfahren nach einem der beiden vorhergehenden Ansprüche, **dadurch gekennzeichnet, daß** ein weiteres Overlay aus mit Bindemittel getränktem oder mit Bindemittel getränktem und mit abriebfestem Material versehenem Trägermaterial auf die Oberfläche des bereits mit dem Laminatträger verbundenen Overlays aufgelegt und mit diesem verpreßt wird.

33. Verfahren nach einem der drei vorhergehenden Ansprüche, **dadurch gekennzeichnet, daß** als Laminatträger eine Spanplatte oder eine mitteldichte Faserplatte verwendet wird.

34. Verwendung eines Laminates, hergestellt nach einem der drei vorhergehenden Ansprüche für Gebäudeoberflächen, insbesondere Wand- und Dekkenflächen, Türblätter, sowie im Möbelbau.

## Claims

1. An overlay (1) provided with decoration for a laminate element, wherein
the overlay (1) has a support layer (7) with an upper surface serving as a visual surface and a lower surface that in the applied state is facing toward the laminate element, wherein
the support layer (7) is impregnated and on its lower surface has a colouring layer (4),
**characterised in that** the lower surface between the support material (7) and the colouring layer (4) has printed layers (2,3) that generate a pattern, and the colouring layer (4) also in the laminated state forms a covering rear surface coating.

2. The overlay according to the previous claim,
**characterised in that** layers disposed on the lower surface of the overlay have layers of structuring imprint, further coloured layers and a colouring layer, and are disposed starting from the support layer in the sequence of structuring imprint, further coloured layers and ultimate the colouring layer.

3. The overlay according to one of the previous claims,
**characterised in that** its upper surface has printed layers that generate a pattern.

4. The overlay according to the previous claim,
**characterised in that** the layers disposed on the upper surface of the overlay have layers of structuring imprint, and further coloured layers, which starting from the support layer are disposed in the sequence of further coloured layers and subsequently structuring imprint.

5. The overlay according to one of the previous claims,
**characterised in that** a wood grain is imprinted as a pattern.

6. The overlay according to one of the previous claims,
**characterised in that** the printed layers generating the pattern are imprinted with gravure printing.

7. The overlay according to one of the previous claims,
**characterised in that** the support layer is an overlay paper.

8. The overlay according to at least one of the previous claims,
**characterised in that** the overlay on its upper surface has a layer that contains a wear-resistant material.

9. The overlay according to the previous claim,
**characterised in that** the layer contains a wear-resistant material mixed with a binding agent.

10. The overlay according to Claim 8 or 9,
**characterised in that** the wear-resistant material contains particles containing Al₂O₃ (corundum).

11. The overlay according to the previous claim,
**characterised in that** the wear-resistant material contains corundum with a grain size between 1 and 80 µm in a quantity of 1 to 20 g/m².

12. The overlay according to one of the previous claims,
**characterised in that** melamine resin and/or a mixture of melamine resin and urea resin and/or a mixture of these with α-cellulose is used as an impregnation agent and/or binding agent.

13. The overlay according to one of the previous claims,
**characterised in that** the colouring layer contains a coloured melamine resin and/or coloured melamine resin with established additives.

14. The overlay according to one of the previous claims,
**characterised in that** the colouring layer is painted on.

15. A method for manufacture of an overlay according to one of the previous claims,
**characterised in that** the support layer is first impregnated, printed on its lower surface with a pattern from a structuring imprint and subsequently a colouring layer is applied to the lower surface, which also in the laminated state forms a covering rear surface coating.

16. The method according to Claim 15,
**characterised in that** the support layer before or after the impregnation is printed on the upper surface with a pattern from structuring imprint.

17. The overlay according to one of the previous claims,
**characterised in that** the pattern from structuring imprint is coloured.

18. The method according to one of the three previous claims,
**characterised in that** the support layer before or after the impregnation is printed on the lower surface or upper surface with further coloured layers.

19. The overlay according to one of the Claims 15 to 18,
**characterised in that** the pattern on the lower surface is applied in the following sequence of layers: structuring imprint or structuring imprint and further coloured layers, and subsequently the colouring layer, and/or on the upper surface is applied in the sequence of layers: colouring layer, structuring imprint or further coloured layers and structuring imprint.

20. The method according to one of the Claims 15 to 19,
**characterised in that** the pattern is imprinted with gravure printing.

21. The method according to one of the Claims 15 to 20,
**characterised in that** a wear-resistant material is applied to the upper surface.

22. The method according to one of the Claims 15 to 21,
**characterised in that** the wear-resistant material is applied before the colouring layer.

23. The method according to the previous claim,
**characterised in that** subsequent to the application of the colouring layer further wear-resistant material is applied to the upper surface.

24. The method according to the previous claim,
**characterised in that** the colouring layer is applied before the wear-resistant material.

25. The method according to one of the Claims 15 to 24,
**characterised in that** for the application of the wear-resistant material the wear-resistant material is applied to or spread on to the impregnation that is still moist, or the impregnation is dried, a further layer of binding agent is applied and the wear-resistant material is applied on to this binding agent layer that is still moist, or the wear-resistant material is mixed with binding agent or with binding agent mixed with α-cellulose and is applied to the impregnation layer to be found on the support layer that is still moist or already dry.

26. The method according to the previous claim,
**characterised in that** the overlay is subsequently dried.

27. The method according to one of the Claims 15 to 26,
**characterised in that** in the application of the impregnation the support layer is impregnated with the impregnation agent.

28. The method according to one of the Claims 15 to 27,
**characterised in that** an overlay paper is used as the support layer.

29. The method according to one of the Claims 15 to 28,
**characterised in that** the colouring layer is painted on.

30. A method for the manufacture of a multi-layer laminate with a laminate support,
**characterised in that** an overlay according to one of the Claims 1 to 14 is laid with its lower surface on the laminate support and is pressed together with the latter.

31. The method according to the previous claim,
**characterised in that** on the other surface of the laminate support a backing layer is applied.

32. The method according to one of the two previous claims,
**characterised in that** a further overlay of a support material impregnated with binding agent or impregnated with binding agent and provided with wear-resistant material is laid on to the surface of the overlay that is already connected with the laminate support and is pressed together with the latter.

33. The method according to one of the three previous claims,
**characterised in that** a chipboard or a medium density fibreboard is used as the laminate support.

34. An application of a laminate, manufactured according to one of the three previous claims, to building surfaces, in particular wall and ceiling surfaces, door panels, and also in furniture construction.

## Revendications

1. Elément de recouvrement ou overlay (1) pourvu d'un motif décoratif, pour un élément stratifié, l'élément de recouvrement (1) comportant une couche de support (7) possédant une face supérieure utilisée comme côté visible et une face inférieure tournée vers l'élément stratifié, à l'état appliqué, la couche de support (7) étant imprégnée et possédant sur sa face inférieure une couche (4) colorante,
**caractérisé en ce que**
la face inférieure forme entre le matériau de support (7) et la couche colorante (4), des couches d'impression (2,3) qui produisent un motif, et la couche (4) colorante, forme également à l'état stratifié, un revêtement couvrant situé sur le côté arrière.

2. Elément de recouvrement selon la revendication précédente, **caractérisé en ce que** les couches disposées sur la face inférieure de l'élément de recouvrement comportent des couches formées d'une empreinte définissant la structure, d'autres couches colorées et une couche colorante, et sont disposées à partir de la couche de support selon la séquence empreinte définissant la structure, autres couches colorées et enfin la couche colorante.

3. Elément de recouvrement selon l'une des revendications précédentes, **caractérisé en ce que** sa face supérieure comporte des couches d'impression qui produisent un motif.

4. Elément de recouvrement selon l'une des revendications précédentes, **caractérisé en ce que** les couches disposées sur la face supérieure de l'élément de recouvrement comportent des couches constituées par une empreinte définissant la structure et d'autres couches colorées, qui sont disposées, à partir de la couche de support, selon la séquence autres couches colorées et ensuite empreinte définissant la structure.

5. Elément de recouvrement selon l'une des revendications précédentes, **caractérisé en ce qu'**une texture imitant le bois est imprimée en tant que motif.

6. Elément de recouvrement selon l'une des revendications précédentes, **caractérisé en ce que** les couches d'impression produisant le motif sont imprimées selon le procédé d'héliogravure.

7. Elément de recouvrement selon l'une des revendications précédentes, **caractérisé en ce que** la couche de support est un papier de recouvrement.

8. Elément de recouvrement selon au moins l'une des revendications précédentes, **caractérisé en ce que** l'élément de recouvrement possède sur sa face supérieure une couche qui contient un matériau résistant à l'usure.

9. Elément de recouvrement selon l'une des revendications précédentes, **caractérisé en ce que** la couche contient un matériau résistant à l'usure, mélangé à un liant.

10. Elément de recouvrement selon la revendication 8 ou 9, **caractérisé en ce que** le matériau résistant à l'usure contient des particules contenant du Al₂O₃ (corindon).

11. Elément de recouvrement selon la revendication précédente, **caractérisé en ce que** le matériau résistant à l'usure contient du corindon possédant une granulométrie comprise entre 1 et 80 µm, en une quantité de 1 à 20 g/m².

12. Elément de recouvrement selon l'une des revendications précédentes, **caractérisé en ce qu'**on utilise comme agent d'imprégnation ou comme liant une résine mélamine et/ou un mélange d'une résine mélamine et d'urée et/ou d'un mélange de cette résine avec de la α-cellulose.

13. Elément de recouvrement selon l'une des revendications précédentes, **caractérisé en ce que** la couche colorante est une résine mélamine colorée et/ou une résine mélamine colorée contenant des additifs usuels.

14. Elément de recouvrement selon l'une des revendications précédentes, **caractérisé en ce que** la couche colorante est appliquée par laquage.

15. Procédé pour fabriquer un élément de recouvrement selon l'une des revendications précédentes, **caractérisé en ce qu'**on imprègne tout d'abord la couche de support, qu'on imprime sur sa face inférieure un motif constitué par une empreinte définissant la structure, et qu'ensuite, on dépose sur la face inférieure une couche colorante, qui forme également, à l'état laminé, un revêtement couvrant de la face arrière.

16. Procédé selon la revendication 15, **caractérisé en ce qu'**avant ou après l'imprégnation, on imprime sur la face supérieure de la couche de support, un motif constitué par une empreinte définissant la structure.

17. Procédé selon l'une des deux revendications précédentes, **caractérisé en ce que** le motif formé par l'empreinte définissant la structure est coloré.

18. Procédé selon l'une des trois revendications précédentes, **caractérisé en ce qu'**avant ou après l'imprégnation, on imprime sur la face inférieure ou sur la couche supérieure de la couche de support d'autres couches colorées.

19. Procédé selon l'une des revendications 15 à 18, **caractérisé en ce que** le motif est déposé sur la face inférieure selon la succession suivante de couches : empreinte définissant la structure ou empreinte définissant la structure et autres couches colorées, et finalement la couche colorante, ou est déposé sur la face supérieure selon la succession de couches : couche colorante, empreinte définissant la structure ou autres couches colorées et empreinte définissant la structure.

20. Procédé selon l'une des revendications 15 à 19, **caractérisé en ce que** le motif est imprimé selon le procédé d'héliogravure.

21. Procédé selon l'une des revendications 15 à 20, **caractérisé en ce qu'**un matériau résistant à l'usure est déposé sur la face supérieure.

22. Procédé selon l'une des revendications 15 à 21, **caractérisé en ce qu'**on dépose le matériau résistant à l'usure avant la couche colorante.

23. Procédé selon l'une des revendications précédentes, **caractérisé en ce qu'**à la suite du dépôt de la couche colorante, on dépose un autre matériau résistant à l'usure sur la face supérieure.

24. Procédé selon la revendication précédente, **caractérisé en ce qu'**on dépose la couche colorante avant le matériau résistant à l'usure.

25. Procédé selon l'une des revendications 15 à 24, **caractérisé en ce que** pour le dépôt résistant à l'usure, on applique ou on disperse le matériau résistant à l'usure sur l'imprégnation encore humide, ou on fait sécher l'imprégnation, on dépose une autre couche formée d'un liant et on applique le matériau résistant à l'usure sur cette couche de liant encore humide, ou on mélange le matériau résistant à l'usure avec un liant ou un liant auquel est mélangé de l'α-cellulose et on le dépose sur la couche d'imprégnation située sur la couche de support et encore humide ou déjà sèche.

26. Procédé selon l'une des revendications précédentes, **caractérisé en ce qu'**on fait sécher ensuite l'élément de recouvrement.

27. Procédé selon l'une des revendications 15 à 26, **caractérisé en ce que** lors du dépôt de l'imprégnation, imprègne la couche de support comportant le milieu d'imprégnation.

28. Procédé selon l'une des revendications 15 à 27, **caractérisé en ce qu'**on utilise comme couche de support un papier de recouvrement.

29. Procédé selon l'une des revendications 15 à 28, **caractérisé en ce qu'**on applique par laquage la couche colorante.

30. Procédé pour fabriquer un stratifié multicouche comportant un support stratifié, **caractérisé en ce qu'**on applique un élément de recouvrement selon l'une des revendications 1 à 14 par sa face inférieure sur le support stratifié et qu'on le comprime avec ce dernier.

31. Procédé selon l'une des revendications précédentes, **caractérisé en ce qu'**on dépose une couche de contre-traction sur l'autre face du support stratifié.

32. Procédé selon l'une des deux revendications précédentes, **caractérisé en ce qu'**on applique un autre élément de recouvrement formé par un matériau de support imprégné par un liant ou imprégné par un liant et pourvu d'un matériau résistant à l'usure, sur la surface de l'élément de recouvrement déjà relié au support stratifié et qu'on le comprime avec ce dernier.

33. Procédé selon l'une des trois revendications précédentes, **caractérisé en ce qu'**on utilise comme support stratifié une plaque d'aggloméré ou une plaque formée de fibres à densité moyenne.

34. Utilisation d'un stratifié, fabriqué selon l'une des trois revendications précédentes, pour des surfaces de bâtiments, notamment des surfaces de murs et de plafonds, des battants de portes ainsi que dans la construction de meubles.
